# EUROPÄISCHE PATENTANMELDUNG

(11) **EP 1 000 683 A2**
(43) Veröffentlichungstag der Anmeldung: **17.05.2000**
(21) Anmeldenummer: 99121918.9
(22) Anmeldetag: 05.11.1999
(51) Int. Cl.: B21D 43/00, B21D 43/05

(54) **Positioniereinrichtung mit Gewichtsausgleich**

(30) Priorität: 10.11.1998 DE 19851743
(71) Anmelder: Schuler Pressen GmbH & Co. KG, 73033 Göppingen (DE)
(72) Erfinder: Hofele, Hans, Dipl.-Ing., 73035 Göppingen (DE); Dangelmayr, Andreas, Dipl.-Ing., 73113 Ottenbach (DE); Eltze, Jürgen, Dr.-Ing., 73033 Göppingen (DE); Thudium, Karl, Dipl.-Ing., 73116 Wäschenbeuren (DE)

(57) **Zusammenfassung**

Eine Positioniereinrichtung (31, 32, 33, 34, 35, 36), insbesondere zum Transportieren und Positionieren von Werkstücken, weist eine Antriebs- und Krafterzeugungseinrichtung (47) auf, mit der ein Trägermittel (41) beweg- und positionierbar ist. An die Antriebs- und Kraftübertragungseinrichtung (47) ist wenigstens eine Krafterzeugungseinrichtung (70) angeschlossen, die in das Antriebs- und Getriebesystem der Antriebs- und Kraftübertragungseinrichtung (47) eine zusätzliche, zu Kompensation der Gewichtskraft der Antriebs- und Kraftübertragungseinrichtng bzw. deren bewegter Teile und evtl. eines Werkstücks dienende Kraft einspeist, soweit diese an den Antrieben der Antriebs- und Kraftübertragungseinrichtung (47) in Erscheinung tritt.

## Beschreibung

Die Erfindung betrifft eine Einrichtung zum Positionieren und Bewegen von Maschinenelementen, insbesondere Werkstückgreifer oder Aufnahmeeinrichtungen zum Werkstücktransport oder zum Werkstückhandling.

Die Bearbeitung von Werkstücken erfordert häufig deren Transport zwischen mehreren Bearbeitungsstationen, bspw. zwischen Pressenstufen. Die Werkstücke sind dabei in der Regel entlang eines vorgegebenen Wegs zu bewegen. Die Werkstücke werden dazu mit entsprechenden Greifer- oder Aufnahmemitteln aufgenommen und von Station zu Station bewegt. In jeder Station geben die Greifer- oder Aufnahmemittel das Werkstück frei und laufen ggfs. über eine Parkposition zu der Ausgangsposition in der in der Bearbeitungsfolge vorausgehenden Bearbeitungsstufe zurück. Der gesamte von den Greifermittel zurückgelegte Weg wird Transferkurve genannt. Dazu ist es bspw. aus der DE 4418417 A1 bekannt, bei einer Transferpresse zwei zueinander parallele Transferschienen 3 vorzusehen, auf denen jeweils Laufwagen längsverschiebbar gelagert sind. Die Transferschienen erstrecken sich entlang eines Transportwegs, der durch alle Pressenstufen führt. Von einem Laufwagen auf einer Transferschiene erstreckt sich eine Quertraverse zu einem Laufwagen auf der anderen Transferschiene. Die Laufwagen sind mit Antriebsmitteln verbunden, mit denen diese entlang der Laufschienen gezielt verstellt bzw. angetrieben werden können. Die Transferschienen sind mit Hubeinrichtungen gekoppelt, die die beiden Transferschienen synchron heben und senken können. Durch die Überlagerung der Hebe- und Senkbewegung der Transferschienen und der Transportbewegung der Laufwagen entsteht die Transferkurve der Quertraversen.

Außerdem ist es bspw. aus der DE 3218450 A1 bekannt, Blechteile mittels eines um eine senkrechte Achse schwenkbaren Greifers zu transportieren. Der Greifer weist einen Teleskoparm mit einem Greiferkopf auf und schwenkt zum Teiletransport um einen in einer horizontalen Ebene liegenden Kreisbogen.

Mit einer solchen Einrichtung lassen sich in einer horizontalen Ebene liegende Kurven erzeugen, d.h. der Greiferkopf wird innerhalb einer Horizontalebene bewegt. Der Antrieb des Greifers, zu dem ein Schwenkantrieb und ein Teleskopantrieb gehören, muss die zur Beschleunigung des Blechteils und zu dessen Abbremsung erforderliche Kraft aufbringen. Wegen der senkrechten Anordnung der Schwenkachse sind der Schwenkantrieb und der Teleskopantrieb jedoch frei von Gewichtskräften.

Soll eine in einer Vertikalebene liegende Kurve durchlaufen werden, d.h. eine Kurve, die sowohl eine horizontale Transportkomponente als auch eine vertikale Hebe- und Senkkomponente aufweist, müssen die Antriebe, die das Heben und Senken bewirken, zusätzlich zu der für die Beschleunigung des Werkstücks erforderlichen Kraft eine Kraft zur Überwindung seiner Gewichtskraft aufbringen. Diese ist außerdem zeit- und positionsabhängig, d.h. bei einem leerlaufenden Greifer erzeugt eine deutlich geringere Gewichtskraft als ein mit einem Werkstück beladener Greifer. Die Antriebe müssen für die maximale auf den Greifer zu übertragende Antriebsleistung ausgelegt werden. Sie sind dadurch entsprechend schwer und haben ein hohes Gewicht.

Hier ist es Ziel der Erfindung, mit möglichst leichten Antrieben auszukommen.

Diese Aufgabe wird mit einer Einrichtung gelöst, die die Merkmale des Patentanspruchs 1 aufweist:

Erfindungsgemäß wird eine Antriebs- und Kraftübertragungseinrichtung, die der Bewegung und Positionierung eines Trägermittels dient, zusätzlich zu der Antriebskraft eine Kompensationskraft zugeleitet, die dem Ausgleich der an dem Trägermittel angreifenden Gewichtskraft dient. Dies ist insbesondere bei Einrichtungen mit Antrieben von Vorteil, die von anderen Achsen mitbewegt werden. Die Gewichtskraft geht von dem Trägermittel, von dem an dem Trägermittel gehaltenen Werkstück und evtl. von Teilen der Antriebs- und Kraftübertragungseinrichtung aus. Wird nun bspw. das Gewicht des Trägermittels und der mitbewegten Teile Antriebs- und Kraftübertragungseinrichtung kompensiert, greift an dem die Vertikalbewegung bewirkenden Antrieb lediglich noch das Gewicht des Werkstücks an. Entsprechend geringer ist das von dem Antrieb aufzubringende Drehmoment und somit die benötigte Leistung. Außerdem vermindert sich evtl. die Reibung in einem zwischen dem Antrieb und dem Trägermittel angeordneten Getriebe.

Ist das Werkstück abgelegt, bewirkt die zusätzlich in die Antriebs- und Kraftübertragungseinrichtung eingeleitete Kompensationskraft in Vertikalrichtung eine vollständige Gewichtskompensation. Auch ist evtl. eine geringe Überkompensation bspw. um die halbe Werkstücklast möglich. Jedoch ist der Antrieb, der für den Wegabschnitt des Trägermittels ohne Werkstück die gleiche Leistung aufbringen kann, wie in einem Wegabschnitt mit Werkstück, hier innerhalb seiner Leistungsgrenze. Es tritt durch den etwa hälftigen Ausgleich der Gewichtskraft der Werkstücke und die nahezu vollständige Kompensation der Gewichtskraft, die von den Teilen der Positioniereinrichtung selbst ausgeht und ohne Kompensation auf den Antrieb wirken würde, eine Verminderung der auf den Antrieb wirkenden Maximalkräfte und eine zeitliche Vergleichmäßigung der Beträge der Kräfte aus. Der Antrieb kann insgesamt leistungsärmer ausgelegt werden und wird dadurch kleiner und leichter.

Die Krafterzeugungseinrichtung kann zu dem mechanischen Antriebsmittel der Positioniereinrichtung parallel wirkend angeordnet sein. Es existiert somit ein Kraftflussweg von ein oder mehreren Antriebsmotoren zu dem Trägermittel. Der Kraftflussweg wird durch geeignete Getriebe, zu denen auch Hebelgetriebe gehören können, gebildet. Direkt an dem Trägermittel oder an einem geeigneten Punkt in dem Kraftübertragungsweg von dem oder den Antrieben zu dem Trägermittel, wird die Kompensationskraft der Krafterzeugungseinrichtung eingespeist. Bedarfsweise kann die Krafterzeugungseinrichtung auch direkt an die Antriebseinrichtung angekoppelt sein.

Die Krafterzeugungseinrichtung kann, insbesondere wenn sie direkt an dem Trägermittel angreift, eine zeitlich konstante Kompensationskraft erzeugen und auf das Trägermittel übertragen. Die Kraft der Krafterzeugungseinrichtung kann einstellbar sein, um eine Anpassung an unterschiedliche Werkstückgewichte zu ermöglichen.

Darüber hinaus ist es möglich, die Krafterzeugungseinrichtung so auszubilden, dass sie eine zeitlich veränderliche Kompensationskraft erzeugen kann. Dies ist bspw. mit Pneumatikzylindern möglich, deren Innendruck von geeigneten Magnetventilen über eine Steuereinheit weg- und/oder zeitabhängig gesteuert wird. Damit ist es über die oben vorgestellte Nährungsweisekompensation des Werkstückgewichts hinaus möglich, die Kompensationskraft für den Transporthub und den Leerhub zu variieren, die an dem Antrieb noch auftretende Gewichtskraftkomponente nahezu vollständig kompensiert ist. Außerdem ist es damit möglich, die Gewichtskraft bei solchen Positioniereinrichtungen zu kompensieren, bei denen sich die auf den Antrieb rückwirkende Komponente der Gewichtskraft positionsabhängig ändert. Bspw. kann dies bei Schwenkarmen der Fall sein, die um eine oder mehrere horizontalen Achsen schwenkbar sind. Ist der Schwenkarm aus seiner Vertikalen heraus geschwenkt, bewirkt die an dem Schwenkarm angreifende Gewichtskraft ein Schwenkmoment, dessen Vorzeichen von der Schwenkrichtung abhängt. Steht der Schwenkarm in seiner Vertikalposition, tritt kein Schwenkmoment auf. Mit zunehmender Neigung des Arms und, wenn der Arm teleskopierbar ist, mit zunehmender Länge desselben, wird das Schwenkmoment größer. Die Kompensation, die idealerweise als nach oben wirkende Vertikalkraft an dem Trägermittel vorzunehmen ist, ist in vielen Fällen nicht ohne weiteres von oben her möglich. Wird das Gewicht an dem Schwenkarm, seiner Lagerung oder einem mitbewegten Teleskopantrieb kompensiert, ist es vorteilhaft, wenn die Kompensationskraft steuerbar ist.

Die Gewichtskraftskompensation ist bei unterschiedlichen Antriebskinematiken möglich. Bspw. kann die Positioniereinrichtung ein oder zwei bspw. parallel zueinander geführte Schwenkarme aufweisen, die endseitig durch eine Quertraverse mit Werkstückgreifermitteln, bspw. Saugereinrichtungen verbunden sind. Die Schwenkarme können bei einer vorteilhaften Ausführungsform an ihrem jeweiligen anderen Ende an einem Schlitten schwenkbar gelagert sein, der jeweils an deinem Pressenständer oder an einem anderweitigen Gestellmittel vertikal verschiebbar gelagert ist. Die Einstellung der Schwenkposition des Schwenkarms ist durch zwei sich mittig an dem Schwenkarm an einem Gelenk treffenden Lenkern möglich, die ihrerseits an Schlitten gelenkig gelagert sind. Diese Schlitten sind angetrieben und legen somit die Höhenposition und die Schwenkposition des Schwenkarms fest. Die Krafterzeugungseinrichtung kann ein auf einen vierten, in Vertikalrichtung verschiebbar gelagerten Schlitten einwirkende Pneumatikeinrichtung sein. Der vierte Schlitten ist mit dem Schwenkarm wiederum über einen Lenker verbunden. Es lässt sich damit die an dem Träger angreifende Gewichtskraft für alle Schwenkstellungen innerhalb eines Arbeitsbereichs der Positioniereinrichtung relativ genau kompensieren, ohne dass die Krafterzeugungseinrichtung die eingeleitete Kraft nachsteuern müßte.

Darüber hinaus ist es möglich, die Horizontalachse des Schwenkarms räumlich festzulegen und den Schwenkarm, bspw. über ein Gestänge oder über einen Drehantrieb, anzutreiben. Durch eine zusätzliche Teleskopierbarkeit des Schwenkarms ist es wiederum möglich, nahezu beliebige Transferkurven zu durchlaufen. Sowohl der Drehantrieb als auch der Teleskopantrieb können gesondert mit einer Krafterzeugungseinrichtung verbunden sein, die eine je nach Schwenkstellung und Teleskopstellung unterschiedliche Kompensationskraft erzeugt.

Die Führung des gelagerten Endes des Schwenkarms kann anstelle einer festen Achse oder einer Linearführung auch durch eine andere Führung, bspw. durch eine Zykloidenführung, gebildet sein.

Einzelheiten vorteilhafter Ausführungsformen der Erfindung ergeben sich aus der Zeichnung, der Beschreibung und/oder Unteransprüchen.

In der Zeichnung sind Ausführungsbeispiele der Erfindung dargestellt. Es zeigen:
- Fig. 1: mehrere aufeinanderfolgende Arbeitsstationen einer Transferpresse mit Transfereinheiten, die jeweils eine eigene Antriebseinrichtung und eine eigene Gewichtskompensationseinrichtung aufweisen, in ausschnittsweiser, perspektivischer Darstellung,
- Fig. 2: eine einzelne Transfereinheit der in Figur 1 dargestellten, durch mehrere Transfereinheiten gebildeten Transfereinrichtung in schematisierter perspektivischer Darstellung,
- Fig. 3: mehrere Arbeitsstationen einer Transferpresse, die durch gewichtskompensierte Transfereinheiten einer abgewandelten Ausführungsform miteinander verknüpft sind, in einer perspektivischen schematischen Darstellung,
- Fig. 4: eine abgewandelte Ausführungsform einer Transfereinheit in einer schematischen perspektivischen Prinzipdarstellung,
- Fig. 5: eine weitere Ausführungsform einer Transfereinheit, in einer schematischen Seitenansicht, und
- Fig. 6: eine Transfereinrichtung mit zwei zusammenwirkenden teleskopierbaren Streben, die jeweils für sich eine Antriebseinrichtung und eine Krafterzeugungseinrichtung zur Kompensation der Gewichtskraft aufweisen.

### Figurenbeschreibung:

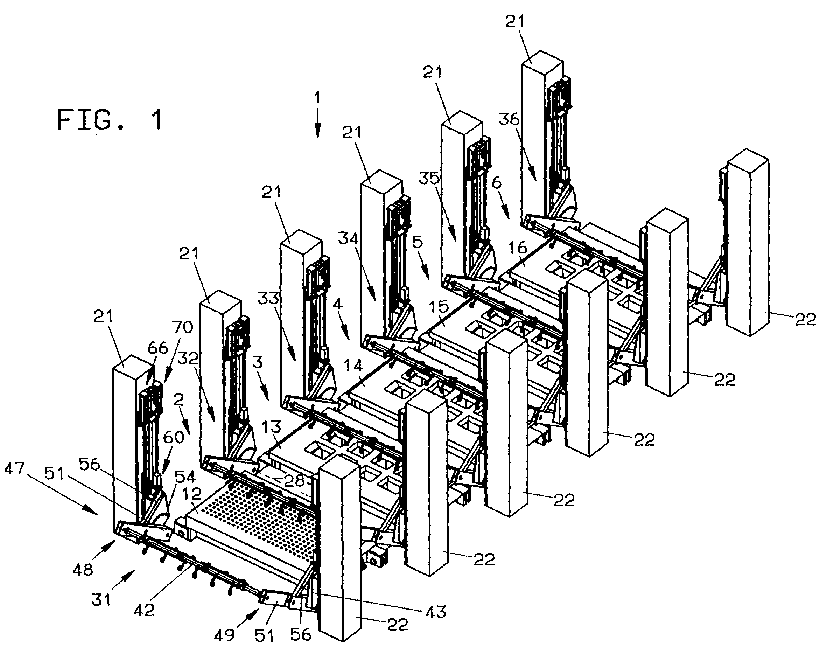

In Figur 1 ist eine Transferpresse 1 anhand ihrer Arbeitsstationen 2, 3, 4, 5, 6 veranschaulicht, von denen jeweils lediglich ein Schiebetisch 12, 13, 14, 15, 16 zur Aufnahme des Werkzeugs veranschaulicht ist. Zu beiden Seiten der durch die Schiebetische 12, 13, 14, 15, 16 gebildeten Reihe sind mit den Schiebetischen 12, 13, 14, 15, 16 jeweils auf Lücke Pressenständer 21, 22 aufgestellt. Zwischen den Ständern 21 ist jeweils ausreichend Platz vorhanden, um einen Schiebetisch durchfahren zu können. Gleiches gilt für die Pressenständer 22.

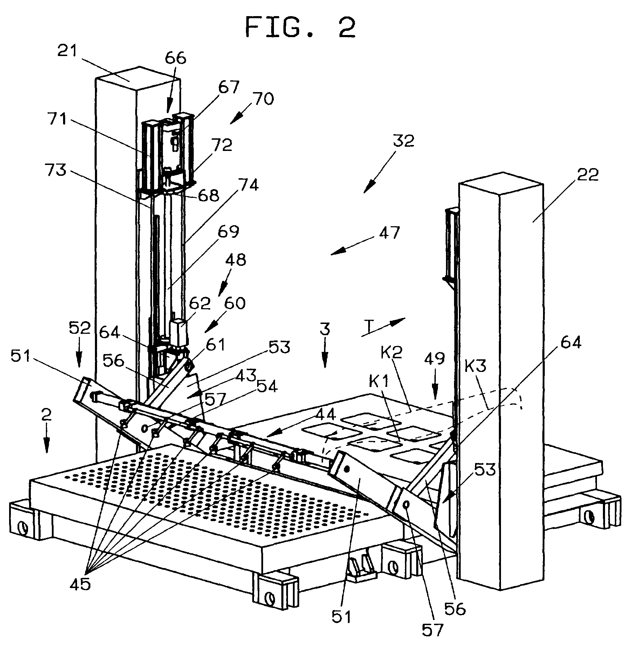

Die einzelnen Pressenstufen 2, 3, 4, 5, 6 sind hinsichtlich des Werkstücktransports durch Transfereinheiten 31, 32, 33, 34, 35, 36 verknüpft, die jeweils gesondert angesteuert sind und somit unabhängig voneinander arbeiten können. Die Transfereinheiten 31 bis 36 sind untereinander gleich ausgebildet. Die nachfolgende Beschreibung der Transfereinheit 32 anhand von Figur 2 gilt somit entsprechend für die übrigen Transfereinheiten 31 sowie 33 bis 36.

Die in Figur 2 veranschaulichte Transfereinheit 32 weist für den Teiletransport zwischen der vorgelagerten Arbeitsstation 2 und der nachgeordneten Arbeitsstation 3 ein Trägermittel 41 auf, das durch eine Quertraverse 42 und von dieser getragene Saugerspinnen 43, 44 gebildet wird. Das Trägermittel wird somit durch eine Saugerbrücke gebildet, an der einzelne Vakuumsauger 45 dazu dienen, Blechteile gezielt aufzunehmen und auch wieder freizugeben.

Die Quertraverse 42 ist von einer Antriebs- und Krafterzeugungseinrichtung 47 getragen, zu der zwei Antriebs- und Kraftübertragungseinheiten 48, 49 gehören. Die Antriebs- und Kraftübertragungseinheit 48 ist als Lenkergetriebe ausgebildet und mit dem in Figur 2 linksseitigen Ende der Quertraverse 42 verbunden, während die Antriebs- und Kraftübertragungseinheit 49 mit dem rechtsseitigen Ende gekoppelt ist. Die Antriebs- und Kraftübertragungseinheiten 48, 49 sind symmetrisch bezüglich einer in Transportrichtung gedachten Vertikalebene ausgebildet. Die nachfolgende Beschreibung der Antriebs- und Kraftübertragungseinrichtung 48 gilt deshalb entsprechend für die Antriebs- und Kraftübertragungseinrichtung 49, weshalb diese in den Figuren 1 und 2 mit den gleichen Bezugszeichen, ohne gesonderte Bezugnahme versehen ist.

Die Antriebs- und Kraftübertragungseinheit 48 weist einen Schwenkarm 51 auf, der an seinem freien Ende 52 ein Ende der Quertraverse 42, um deren Längsachse schwenkbar oder drehbar festlagert oder hält. Die Quertraverse 42 ist dabei im Wesentlichen rechtwinklig zu dem Schwenkarm 51 und quer zu einer Transportrichtung T ausgerichtet, die durch die Folge der Arbeitsstation 2, 3, 4, 5, 6 bestimmt wird.

Der Schwenkarm 51 ist an seinem von dem Ende 52 der Quertraverse 42 abliegenden Ende schwenkbar an einem Schlitten 53 gelagert, der zur Abstützung des Schwenkarms 51 mit einer Bogenführung 54 versehen sein kann. Der Schlitten 53 ist an den Pressenständern 21 (22) vertikal verschiebbar gelagert. Er ist mit keinerlei Antriebseinrichtung versehen und somit frei verschiebbar. Zu seiner Lagerung dient eine Linearführung. Bedarfsweise kann jedoch auch eine andere Führung, bspw. eine Bogenführung vorgesehen sein.

Zum Antrieb des Schwenkarms 51 dient ein Lenker 56, der etwa mittig bei einem Gelenk 57 mit dem Schwenkarm 51 verbunden ist. Mit seinem anderen Ende ist der Lenker 56 an einem Drehantrieb 60 gefasst, dessen Antrieb von einem Wellenstumpf 61 gebildet ist, der drehfest mit dem Lenker 56 verbunden ist. Der Drehantrieb 60 weist einen Antriebsmotor 62 auf, der über ein entsprechendes Untersetzungs- und Winkelgetriebe auf den Wellenstumpf 61 wirkt. Der Antriebsmotor 62 ist von einer nicht weiter dargestellten Steuereinrichtung gesteuert. Er kann als Steilmotor ausgebildet sein. Bei einer bevorzugten Geometrie ist der Lenker 56 so lang wie der halbe Schwenkarm und genau mittig eingelenkt.

Der Drehantrieb 60 ist von einem Schlitten 64 getragen, der parallel zu dem Schlitten 53 linear verschiebbar gelagert ist. Jedoch können die Führungen bedarfsweise auch in einem Winkel zueinander angeordnet sein. Der Schlitten 64 ist im Gegensatz zu dem Schlitten 53 nicht frei bewegbar, sondern über einen Stellantrieb 66 in seiner Vertikalposition festgelegt. Der Stellantrieb 66 weist einen Stellmotor 67 auf, der von der gleichen Steuereinrichtung wie der Antriebsmotor 62 gesteuert sein kann. Über ein Untersetzungsgetriebe und ein weiteres Getriebe, das die Drehbewegung des Stellmotors 67 in eine Linearbewegung umsetzt, bspw. ein Spindelhubgetriebe 68 und eine Übertragungsstange 69, ist der Stellantrieb 66 mit dem Schlitten 64 verbunden. Durch die Vertikalposition des Schlittens 64 und somit des Wellenstumpfs 61 und durch die von dem Drehantrieb 60 festgelegte Schwenkposition des Lenkers 56, ist der Punkt, an dem sich das Gelenk 57 befindet, eindeutig festgelegt. Damit ist auch die Schwenkposition des Schwenkhebels 51 und somit die Position der Quertraverse 42 festgelegt. Durch geeignete Ansteuerung des Antriebsmotors 62 und des Stellmotors 67 kann eine gewünschte Transferkurve gezielt durchlaufen werden.

An dem Schlitten 64 greift außer dem Stellantrieb 66 eine Krafterzeugungseinrichtung 70 an. Zu dieser gehören zwei Pneumatikzylinder 71, 72, die an einer Zugstange 73, 74 jeweils eine bspw. konstante, vertikal nach oben gerichtete Zugkraft abgeben. Die Zugstangen 73, 74 sind beide jeweils mit dem Schlitten 64 verbunden. Die Zugkraft ist von dem in den Pneumatikzylindern 71, 72 vorhandenen Luftdruck abhängig. Dieser ist zumindest einstellbar; vorzugsweise ist er von der nicht weiter veranschaulichten Steuereinrichtung steuerbar. Jedoch ist der Luftdruck von der Vertikalposition der Zugstangen 73, 74 und somit des Schlittens 64 im Wesentlichen unabhängig.

Die Krafterzeugungseinrichtung 70 beaufschlagt den Schlitten 64 mit einer vertikal nach oben gerichteten Kraft, die dem Gewicht der Antriebs- und Krafterzeugungseinheit 48 zuzüglich des halben erwarteten Werkstückgewichts übereinstimmt.

Die insoweit beschriebene Transfereinheit 32 arbeitet wie folgt:

Es wird angenommen, dass sich zu Beginn eines Arbeitsspiel die beiden Schwenkarme 51 in einer Vertikalstellung befinden. Die Lenker 56 sind jeweils in einer vertikal nach unten gerichtete Position geschwenkt und die Schlitten 64 befinden sich in einer Vertikalposition, die eine Parkposition der Quertraverse 42 markiert, d.h. diese in einer geeigneten Höhe einstellt. Öffnen nun die vor- und nachgeordneten Werkzeuge, werden die Antriebsmotoren 62 so angesteuert, dass beide Lenker 56 zu der Bearbeitungsstation 2 schwenken. Zugleich werden die Stellmotoren 67 so angesteuert, dass die durch das sich einstellenden Verschwenken der Schwenkarme 51 auftretende Höhenänderung der Quertraverse 42 im Wesentlichen ausgeglichen und eine eventuell gewünschte überlagerte Hubbewegung durchgeführt wird. Es wird dadurch mit der Quertraverse 42 ein erster Kurvenabschnitt K1 gefahren (Figur 2). Nach Aufnahme eines Werkstücks an den Saugern 45, werden die Antriebsmotore 62 und die Stellmotore 67 nun so angesteuert, dass ein Transferkurvenabschnitt K2 durchlaufen wird. Die nun an der Quertraverse 42 angreifende Gewichtskraft des Werkstücks wird von den Krafterzeugungseinrichtungen 70 zur Hälfte kompensiert. Die Stellmotoren 67 und Antriebsmotoren 62 müssen deshalb zwar die für das Werkstück erforderliche Beschleunigungskraft aufbringen. Die zur Überwindung seiner Gewichtskraft erforderliche Leistung ist jedoch auf die Hälfte oder zumindest deutlich reduziert.

Nach Ablegen des Werkstücks in der Bearbeitungsstation 3 wird durch geeignetes Ansteuern der Stellmotore 67 und der Antriebsmotore 62 letztendlich der Kurvenzug K3 der Transferkurve durchlaufen. Dieser ist wie der Kurvenzug K1 ein Leerhub ohne Belastung der Quertraverse 42 durch das Werkstück. Die Antriebe sind von der Gewichtskraft mitbewegter Antriebe und Getriebeteile entlastet. Es müssen nur Trägheitskräfte und das Werkstückgewicht überwunden werden. Diese Kraft liegt im Leistungsbereich der Antriebe, die somit bei gleicher Transportdynamik deutlich leichter ausfallen können als ohne Gewichtskompensation durch die Krafterzeugungseinrichtung 70. Die ist insbesondere im Hinblick auf die den Stellantrieb 60 von Bedeutung, der von der Hubeinheit 66 gehoben und gesenkt werden muss. Wird dieses Gewicht kompensiert, ist wiederum der Leistungs- und Gewichtsaufwand an dem Hubantrieb geringer. Unter Umständen lässt sich mit der vorgestellten Maßnahme die geforderte Dynamik erst realisieren. Die vorgestellte Positioniereinrichtung weist deshalb bei geringen Antriebsleistungen eine gute Dynamik, eine hohe Positioniergeschwindigkeit und eine gute Positioniergenauigkeit auf. Sie kann außer bei Transfereinrichtungen auch anderweitig Anwendung finden.

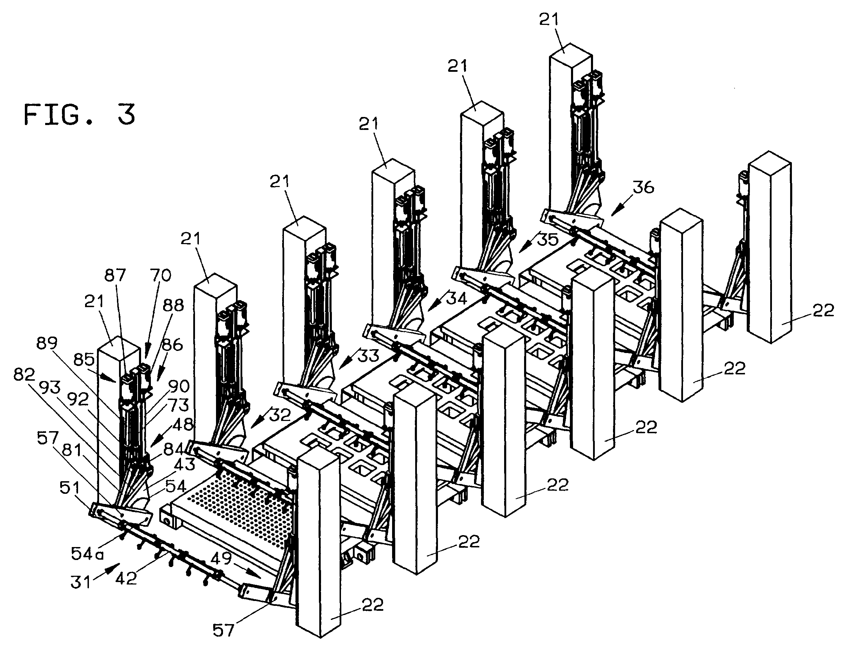

Eine abgewandelte Ausführungsform der Transfereinheiten 31, 32, 33, 34, 35, 36 geht aus Figur 3 hervor und wird nachfolgend anhand der in Figur 3 ersten Transfereinheit 31 beschrieben. Die anderen Transfereinheiten 32 bis 36 sind baugleich, so dass die Beschreibung ohne erneute Erläuterung entsprechend gilt. In der nachfolgenden Beschreibung verwendete Bezugszeichen, die mit Bezugszeichen in der vorstehenden Beschreibung übereinstimmen, bezeichnen bau- und/oder funktionsgleiche Teile.

Die Quertraverse 42 ist von der Antriebs- und KraftÜbertragungseinrichtung 47 getragen, deren linke Antriebs- und Kraftübertragungseinheit 48 als Lenkergetriebe baugleich mit der rechten Antriebs- und Kraftübertragungseinheit 49, jedoch spiegelsymmetrisch zu dieser ausgebildet ist.

Die Antriebs- und Kraftübertragungseinrichtung 48 weist einen in Vertikalrichtung frei verschiebbar gelagerten Schlitten 43 auf, an dem der Schwenkarm 51 schwenkbar gelagert ist. Dazu dient die Kurvenführung 54 in Verbindung mit einem Lagerzapfen 54a. An dem Gelenk 57 greifen zwei Lenker 81, 82 an, die miteinander einen spitzen Winkel einschließen. An ihrem jeweiligen von dem Gelenk 57 abliegenden Ende sind die Lenker 81, 82 jeweils schwenkbar an einem Linearschlitten 83, 84 gefasst. Die Schlittenführungen der Linearschlitten 83, 84 sind parallel zueinander ausgerichtet. Bedarfsweise können sie miteinander auch einen Winkel einschließen oder als Bogenführungen ausgebildet sein.

Die Linearschlitten 83, 84 sind mit Linearantrieben 85, 86 verbunden, die im vorliegenden Ausführungsbeispiel durch Stellmotoren 87, 88 in Verbindung mit Getrieben, bspw. Spindelhubgetrieben 89, 90, gebildet sind. Diese setzen die Drehbewegung der Stellmotoren 87, 88 in Linearbewegungen um, die den Linearschlitten 83, 84 erteilt werden.

Zum Ausgleich des Gewichts der Antriebs- und Kraftübertragungseinrichtung 47 und evtl. des Gewichts oder des halben Gewichts des von dieser getragenen Werkstücks, dient die Krafterzeugungseinrichtung 70. Zu dieser gehört der Pneumatikzylinder 71, der mit seiner Zugstange 73 auf einen linear verschiebbar gelagerten Schlitten 92 wirkt. Dieser ist über einen Lenker 93 mit dem Schwenkarm 51 verbunden. Der Lenker 93 kann dabei zu dem Gelenk 57 oder einem in der Nähe desselben angeordneten Gelenkpunkt geführt sein.

Die insoweit beschriebene Antriebs- und Krafterzeugungseinrichtung 47 legt den Raumpunkt, an dem sich das Gelenk 57 befindet, durch Zusammenspiel der beiden Stellmotoren 87, 88 fest. Damit ist auch die Schwenkstellung des Schwenkarms 51 und dessen Vertikalposition eindeutig festgelegt. Die Krafterzeugungseinrichtung 70 übernimmt in jeder Schwenkstellung des Schwenkarms 51 einen großen Teil des Gewichts der Antriebs- und Krafterzeugungseinrichtung 47 und ggfs. auch einen Teil des Gewichts des zu transportierenden Werkstücks.

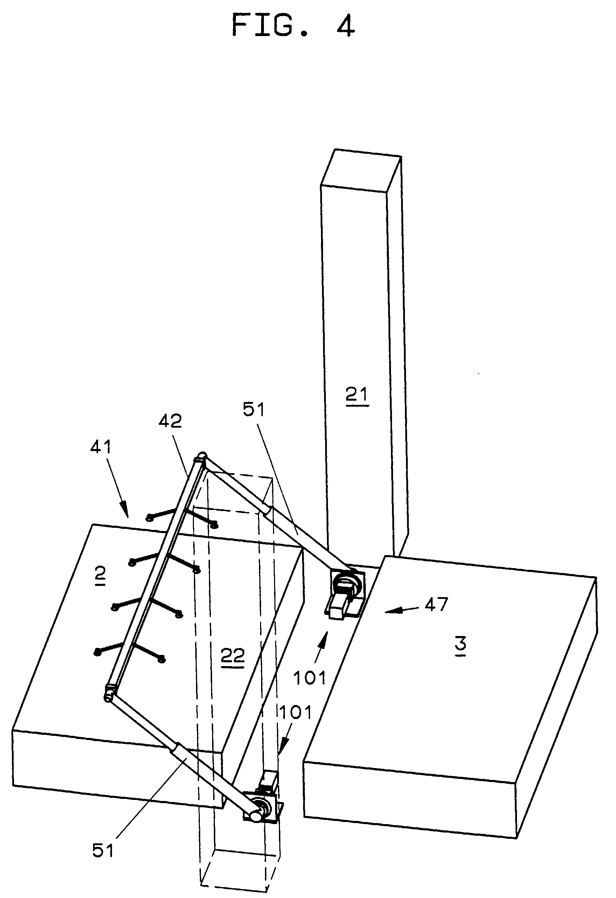

Eine abgewandelte Ausführungsform der Antriebs- und Kraftübertragungseinrichtung 47 ist in Figur 4 veranschaulicht. Während die Schwenkarme 51 der vorstehend beschriebenen Ausführungsformen nicht zwingend, jedoch vorzugsweise mit fester Länge, d.h. nicht teleskopierbar ausgebildet sind, sind die Schwenkarme 51 der in Figur 4 veranschaulichten Ausführungsform der Antriebs- und Krafterzeugungseinrichtung 47 teleskopierbar und mit Teleskopantrieben versehen, die mit den Schwenkarmen 51 mitgeschwenkt werden und in deren Innenraum angeordnet sind. Die Schwenkarme 51 sind um eine Querachse schwenkbar gelagert, die in ihrer Vertikalposition durch vertikal unverstellbare Schwenkantriebe 101 festgelegt ist. Sowohl den Teleskopantrieben der Schwenkarme 51, als auch den Schwenkantrieben 101 sind nicht weiter veranschaulichte Kraftgeneratoren zugeordnet. Während die Teleskopantriebe und die Schwenkantriebe 101 jeweils die Position des Schwenkarms und die Länge desselben festlegen, speisen die Kraftgeneratoren eine steuerbare Kraft parallel zu dem jeweiligen Antrieb in das System ein. Die Kraft ist lageabhängig und von der computergestützten Steuereinrichtung so festgelegt, dass in jeder Schwenkposition und in jeder Teleskopposition die auf die jeweiligen Antriebe wirkende Gewichtskraft nährungsweise kompensiert ist. Wirkt die Gewichtskraft in Vertikalposition der Schwenkarme 51 im Wesentlichen ausschließlich auf die Teleskopantriebe ein, werden diese, wenn die Teleskoparme 51 mehr und mehr in die Waagerechte übergehen, zunehmend entlastet, wobei das Gewicht dann als Drehmoment an den Drehantrieben 101 in Erscheinung tritt. Die Kraftgeneratoren steuern diesem entsprechend der Position der Quertraverse 42 entsprechend gegen.

Bei allen vorgestellten Antriebs- und Krafterzeugungseinrichtungen 47 ist die Quertraverse 42 mit ihren Enden drehbar an den Schwenkarmen 51 gefasst. Zur Bestimmung und Festlegung der auch als Kipplage bezeichneten Drehposition der Quertraverse 42, um die Querachse (Längsachse der Quertraverse 42) kann in dem Schwenkarm 51 ein geeigneter Antrieb vorgesehen sein. Im einfachsten Fall ist dies ein Zahnriemen, der mit einem drehfest mit der Quertraverse 42 verbundenen Zahnriemenrad kämmt und über ein an dem anderen Ende des Schwenkarms 51 vorgesehenes Zahnriemenrad läuft. Ist dieses untere Zahnriemenrad drehfest angeordnet, unternimmt die Quertraverse 42 während des Durchlaufs durch die Transferkurve keinerlei Schwenk- oder Kippbewegung. Ist eine solche gewünscht, kann auch ein gesonderter Antrieb, bspw. für das untere Zahnriemenrad, vorgesehen sein.

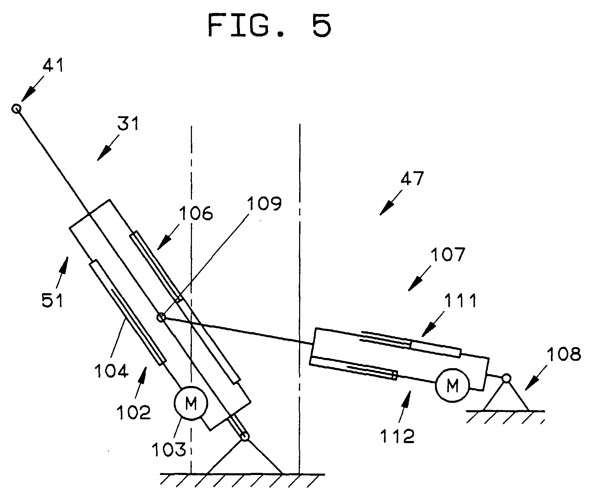

Eine weitere Ausführungsform der gewichtskraftkompensierten Antriebs- und Krafterzeugungseinrichtung 47 geht schematisch aus Figur 5 hervor. Der als längenverstellbare Strebe ausgebildete Schwenkarm 51 weist einen Linearstellantrieb 102 auf, der bspw. durch einen Motor 103 und ein angeschlossenes Spindelhubgetriebe 104 gebildet wird. Parallel zu dieser von dem Linearstellantrieb 102 gebildeten Antriebseinrichtung ist ein Pneumatikzylinder 106 angeordnet, dessen Innendruck von der Steuereinrichtung über geeignete Ventile, bspw. Magnetventile oder steuerbare Drosseln, eingestellt wird. Die von dem Pneumatikzylinder 106 abgegebene Kraft wird dabei so gesteuert, dass sie im Wesentlichen der auf den Schwenkarm 51 einwirkenden Längskraft entspricht. Somit muss der Motor 103 hinsichtlich seiner Leistung lediglich auf einen Teil der aufzuwendenden Antriebsleistung ausgelegt werden. Während der Pneumatikzylinder 106 die Kraft übernimmt, bestimmt der Motor 103 die genaue und präzise Position.

Zur Festlegung der Schwenkstellung des Schwenkarms oder Schwenkhebels 51 dient eine prinzipiell gleich ausgebildete Strebe 107, die zwischen einem Fixpunkt 108 und einem an dem Schwenkarm 51 vorgesehenen Gelenkpunkt 109 angeordnet ist. Die Strebe 107 besteht aus einer Parallelanordnung aus einem Kraftgenerator 111 und einem Stellantrieb 112. Während der Kraftgenerator 111 die erforderliche Kraft aufbringt, übernimmt der Positionierantrieb 112 die Festlegung der Feinpositionierung. Beides erfolgt unter der Steuerung der Steuereinrichtung positionsabhängig.

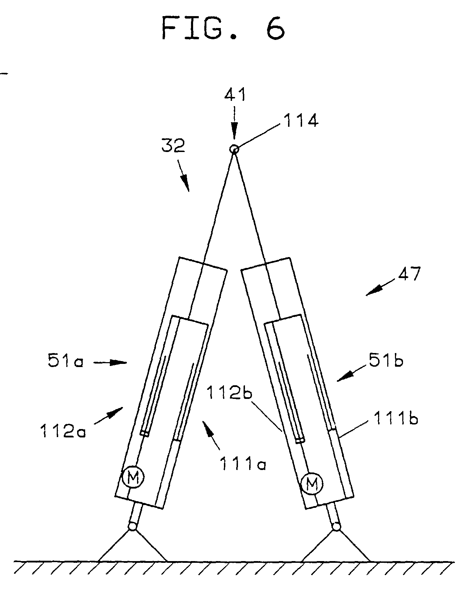

Eine weitere Ausführungsform einer als Lenkergetriebe ausgebildeten Antriebs- und Kraftübertragungseinheit ist in Figur 6 veranschaulicht. Die Antriebs- und Kraftübertragungseinrichtung 47 wird durch zwei endseitig an Fixpunkten schwenkbar gelagerte, längenverstellbare Schwenkarme 51a, 51b gebildet, die endseitig bei einem Gelenk 114 gelenkig miteinander verbunden sind. In jedem Schwenkarm 51a, 51b die untereinander vollkommen gleich ausgebildet sind, sind ein Kraftgenerator 111 (a, b) und eine Positioniereinrichtung 112 (a, b) parallel wirkend angeordnet. Die Kraftgeneratoren 111a und 111b werden von der Steuereinrichtung unabhängig voneinander so angesteuert, dass der jeweils auf sie entfallende Anteil der Gewichtskraft kompensiert wird. Entsprechend sind beide Positioniereinrichtungen 112a, 112b kräftefrei und übernehmen lediglich die Feinpositionierung.

Eine Positioniereinrichtung 31, 32, 33, 34, 35, 36 insbesondere zum Transportieren und Positionieren von Werkstücken, weist eine Antriebs- und Krafterzeugungseinrichtung 47 auf, mit der ein Trägermittel 41 beweg- und positionierbar ist. An die Antriebs- und Kraftübertragungseinrichtung 47 ist wenigstens eine Krafterzeugungseinrichtung 70 angeschlossen, die in das Antriebs- und Getriebssystem der Antriebs- und Kraftübertragungseinrichtung 47 eine zusätzliche, zu Kompensation der Gewichtskraft der Antriebs- und Kraftübertragungseinrichtng bzw. deren bewegter Teile und evtl. eines Werkstücks dienende Kraft einspeist, soweit diese an den Antrieben der Antriebs- und Kraftübertragungseinrichtung 47 in Erscheinung tritt.

## Patentansprüche

1. Einrichtung (32) zur Positionierung und Bewegung von Maschinenelementen, insbesondere Werkstückgreifer- oder Aufnahmeeinrichtungen zum Werkstücktransport oder -handling,
mit einer Antriebs- und Kraftübertragungseinrichtung (47), die wenigstens ein mechanisches Antriebsmittel (60, 66, 101) enthält und die ein Trägermittel (41) trägt, das mittels der Antriebs- und Kraftübertragungseinrichtung (47) zwischen zwei voneinander beabstandeten Orten beweg- und positionierbar ist,
mit wenigstens einer Krafterzeugungseinrichtung (70), die an die Antriebs- und Kraftübertragungseinrichtung (47) angeschlossen ist, um eine eine Vertikalkomponente aufweisende Kraft zur wenigstens näherungsweisen Kompensation der von der Antriebs- und Kraftübertragungseinrichtung (47), des Trägermittels (42) und eventuellen Werkstücken ausgehenden Gewichtskraft auf die Antriebs- und Krafterzeugungseinrichtung (47) zu übertragen.

2. Einrichtung nach Anspruch 1, dadurch gekennzeichnet, dass die Krafterzeugungseinrichtung (70) zu dem mechanischen Antriebsmittel (60, 66, 101) parallel wirkend angeordnet ist.

3. Einrichtung nach Anspruch 1, dadurch gekennzeichnet, dass die Antriebs- und Kraftübertragungseinrichtung (47) wenigstens einen Schwenkarm (51) enthält, der an einem Ende mit dem Trägermittel (41) verbunden und um eine Horizontalachse schwenkbar gelagert ist.

4. Einrichtung nach Anspruch 3, dadurch gekennzeichnet, dass die Horizontalachse des Schwenkarms (51) durch eine Lagereinrichtung (54) festgelegt ist, die an einer Führung gelagert ist.

5. Einrichtung nach Anspruch 4, dadurch gekennzeichnet, dass die Führung eine Linearführung ist.

6. Einrichtung nach Anspruch 1, dadurch gekennzeichnet, dass der Schwenkarm (51) längenverstellbar ist.

7. Einrichtung nach Anspruch 1, dadurch gekennzeichnet, dass zu der Antriebs- und Kraftübertragungseinrichtung (47) zwei im Abstand parallel zueinander geführte Schwenkarme (51) gehören, die untereinander durch das Trägermittel (41) verbunden sind.

8. Einrichtung nach Anspruch 1, dadurch gekennzeichnet, dass das Trägermittel (41) länglich ausgebildet und von der Antriebs- und Kraftübertragungseinrichtung (47) vorzugsweise quer zu seiner Längserstreckung bewegt wird.

9. Einrichtung nach Anspruch 3, dadurch gekennzeichnet, dass jedem Schwenkarm (51) wenigstens eine Krafterzeugungseinrichtung (70) zugeordnet ist.

10. Einrichtung nach Anspruch 1, dadurch gekennzeichnet, dass jedem Antriebsmittel (112a, 112b) jeweils eine Krafterzeugungseinrichtung (111a, 111b) zugeordnet ist.

11. Einrichtung nach Anspruch 1, dadurch gekennzeichnet, dass die Krafterzeugungseinrichtung (70) eine in Betrieb zeitlich unveränderliche Kraft-Weg-Kennlinie aufweist.

12. Einrichtung nach Anspruch 1, dadurch gekennzeichnet, dass die Krafterzeugungseinrichtung (70) eine konstante Kraft erzeugt.
